# EUROPÄISCHE PATENTSCHRIFT

(11) **EP 3 271 996 B1**
(45) Veröffentlichungstag und Bekanntmachung des Hinweises auf die Patenterteilung: **21.08.2019**
(21) Anmeldenummer: 16704545.9
(22) Anmeldetag: 15.02.2016
(51) Int. Cl.: H02K 1/30, H02K 15/16, H02K 7/102

(54) **ELEKTROMOTOR**
ELECTRIC MOTOR
MOTEUR ÉLECTRIQUE

(30) Priorität: 19.03.2015 DE 102015003468
(43) Veröffentlichungstag der Anmeldung: 24.01.2018
(60) Teilanmeldung: 17001613.3
(73) Patentinhaber: SEW-EURODRIVE GmbH & Co. KG, 76646 Bruchsal (DE)
(72) Erfinder: PARTHEYMÜLLER, Alexander, 76139 Karlsruhe (DE)
(86) Internationale Anmeldenummer: PCT/EP2016/000251
(87) Internationale Veröffentlichungsnummer: WO 2016/146232

(56) Entgegenhaltungen:
- EP-A1- 1 892 817
- EP-A2- 1 895 641
- WO-A1-2007/111425
- WO-A1-2014/185229
- DE-A1- 4 130 111
- DE-A1-102012 212 295
- US-A1- 2013 307 364

## Beschreibung

Die Erfindung betrifft einen Elektromotor.

Es ist allgemein bekannt, dass ein Elektromotor eine relativ zum Stator drehbar gelagerte Rotorwelle aufweist.

Aus der EP 1 895 641 A2 ist als nächstliegender Stand der Technik ein Direktantrieb bekannt.

Aus der WO 2007/111425 A1 ist eine Windturbine bekannt.

Aus der US 2013/0307364 A1 ist eine Wellenbefestigung für einen hocheffizienten Permanentmotor bekannt.

Aus der WO 2014/185229 A1 ist ein elektrischer Linearaktuator bekannt.

Aus der EP 1 892 817 A1 ist ein rahmenloser Motor bekannt.

Aus der DE 10 2012 212 295 A1 ist ein Verfahren zum Erzeugen einer ein Drehmoment übertragenden Verbindung bekannt.

Aus der DE 41 30 111 A1 ist eine Befestigungsvorrichtung bekannt.

Der Erfindung liegt daher die Aufgabe zugrunde, einen lagerlosen Antrieb für eine anzutreibende Vorrichtung weiterzubilden.

Erfindungsgemäß wird die Aufgabe bei dem Elektromotor nach den in Anspruch 1 angegebenen Merkmalen gelöst.

Wichtige Merkmale der Erfindung bei dem Elektromotor, insbesondere lagerloser Elektromotor, mit Rotor und Stator, sind, dass der Rotor eine Rotorwelle aufweist, auf die ein Rotorpaket aufgesteckt ist und mit der Rotorwelle drehfest verbunden ist,

wobei das Rotorpaket in axialer Richtung aufeinander gestapelte Rotorsegmente aufweist und eine Zentrierscheibe sowie ein Pressverbindungsmittel, insbesondere ein eine Schrumpfscheibe und Pressringe aufweisendes Schrumpfverbindungsmittel,

wobei der aus den Rotorsegmenten gebildete Stapel zwischen der Zentrierscheibe und dem Pressverbindungsmittel angeordnet ist.

Von Vorteil ist dabei, dass der Rotor vorkomplettiert ist zusammen mit dem Pressverbindungsmittel und somit am Stator festlegbar ist, insbesondere über die Zentrierscheibe, welche die Zentrierung am Stator hierbei ausführt und auch zur Befestigung mit dem Stator, insbesondere einem Flanschteil des Stators verbunden ist. Erst beim Verbinden des Rotors mit der anzutreibenden Welle, wozu das Pressverbindungsmittel betätigt wird, wird die Verbindung der Zentrierscheibe mit dem Stator, insbesondere mit dem Flanschteil des Stators, wieder gelöst und somit der Rotor zum Stator relativ drehbar ausgeführt.

Bei einer vorteilhaften Ausgestaltung ist das Pressverbindungsmittel von den Spannschrauben haltbar, insbesondere bei Transport des Elektromotors, insbesondere vor dem Anmontieren an eine anzutreibende Vorrichtung. Von Vorteil ist dabei, dass das Pressverbindungsmittel am Rotor gehalten ist.

Erfindungsgemäß ist das Pressverbindungsmittel mittels einer oder der Spannschrauben betätigbar zum Herstellen einer Pressverbindung der Rotorwelle mit einer anzutreibenden Hohlwelle,
insbesondere wobei beim Betätigen, also Einschrauben der Spannschrauben in ein Teil des Pressverbindungsmittels, eine Pressverbindung der Rotorwelle mit einer anzutreibenden Welle herstellbar ist. Von Vorteil ist dabei, dass mittels der Spannschrauben nicht nur das

Paket aus Rotorsegmenten zusammengehalten wird sondern auch das Pressverbindungsmittel betätigt wird.

Bei einer vorteilhaften Ausgestaltung weist der Elektromotor ein mit dem Stator, insbesondere Statorgehäuse, verbundenes Flanschteil auf. Von Vorteil ist dabei, dass am Flanschteil die Zentrierscheibe ausrichtbar und festlegbar ist. Hierzu weist das Flanschteil einen konischen Oberflächenabschnitt auf, der einem konischen Oberflächenabschnitt der Zentrierscheibe entsprechend ausgebildet ist.

Erfindungsgemäß sind Spannschrauben durch Ausnehmungen der Rotorsegmente und/oder Zentrierscheibe hindurchgeführt,
wobei mittels der Spannschrauben der Stapel zwischen der Zentrierscheibe und dem Pressverbindungsmittel einspannbar ist,
insbesondere wobei die Spannschrauben axial gerichtet angeordnet sind, insbesondere also in Rotorachsrichtung. Von Vorteil ist dabei, dass das einspannen in einfacher Weise ausführbar ist.

Bei einer vorteilhaften Ausgestaltung sind die Spannschrauben jeweils in eine Gewindebohrung eines Teils des Pressverbindungsmittels eingeschraubt, insbesondere zumindest teilweise eingeschraubt sind,
insbesondere wobei der Kopf einer jeweiligen Spannschraube an der Zentrierscheibe anliegt, insbesondere die Zentrierscheibe auf den Stapel hin drückt. Von Vorteil ist dabei, dass die Spannschrauben in ein Ringteil einschraubbar sind und somit das Ringteil axial verschieben können, wodurch das Pressverbindungsmittel betätigbar ist.

Bei einer vorteilhaften Ausgestaltung sind am radial äußeren Umfang des jeweiligen Rotorsegments Dauermagnete angeordnet, insbesondere wobei das Rotorsegment ein Blechpaket aufweist, auf dessen radial äußerem Umfang des jeweiligen Rotorsegments Dauermagnete angeordnet sind. Von Vorteil ist dabei, dass der Motor als Synchronmotor ausführbar ist und/oder mittels der Spannschrauben abstoßende Magnetkräfte zwischen den Rotorsegmenten überwindbar sind.

Erfindungsgemäß weist das Pressverbindungsmittel eine Schrumpfscheibe und Pressringe auf, wobei die Schrumpfscheibe an ihrer äußeren Oberfläche zwei Konusabschnitte aufweist, worauf die Pressringe verschiebbar angeordnet sind, wobei Spannschrauben mit zumindest einem der Pressringe schraubverbindbar sind. Von Vorteil ist dabei, dass als Pressverbindungsmittel eine einfach aufgebaute Schrumpfscheibenverbindung verwendbar ist.

Bei einer vorteilhaften Ausgestaltung weist die Zentrierscheibe an ihrer Oberfläche einen Konusabschnitt auf und das Flanschteil einen entsprechenden Konusabschnitt an seiner Oberfläche auf, so dass die beiden Konusabschnitte zumindest in einem Abschnitt oder abschnittsweise aneinander anliegen,
wobei die Zentrierscheibe mit dem Flanschteil lösbar verbunden ist, insbesondere schraubverbunden ist,
insbesondere bei Transport des Motors, insbesondere also vor dem Anmontieren an eine anzutreibende Vorrichtung. Von Vorteil ist dabei, dass eine Zentrierung des Rotors zum Stator über die konischen Oberflächenabschnitte der Zentrierscheibe und des Flanschteils ausführbar ist. Somit ist schon bei Transport des lagerlosen Motors vor dem Verbinden mit der anzutreibenden Vorrichtung der Rotor zum Stator ausgerichtet.

Bei einer vorteilhaften Ausgestaltung weist die Zentrierscheibe weitere Ausnehmungen auf, welche in Umfangsrichtung voneinander regelmäßig beabstandet sind. Von Vorteil ist dabei, dass ein formschlüssiges Einrasten eines Arretierelements; insbesondere Stößels, in einfacher Weise ausführbar ist und die Arretierung in geringen Winkelabständen ausführbar ist.

Bei einer vorteilhaften Ausgestaltung sind weitere erste Ausnehmungen auf einem ersten Radialabstand und weitere zweite Ausnehmungen auf einem zweiten Radialabstand angeordnet, wobei der erste Radialabstand größer ist als der zweite Radialabstand,
insbesondere wobei die weiteren ersten Ausnehmungen in Umfangsrichtung voneinander regelmäßig beabstandet sind,
insbesondere wobei die weiteren ersten Ausnehmungen in Umfangsrichtung voneinander regelmäßig beabstandet sind. Von Vorteil ist dabei, dass eine weiter feinere Winkelbeabstandung für die Arretierungspositionen erreichbar ist.

Bei einer vorteilhaften Ausgestaltung ist am Flanschteil zumindest ein insbesondere als Hubmagnet ausgeführter Elektromagnet angeordnet, von welchem jeweils ein Stößel entgegen der von einem Federelement erzeugten Federkraft bewegbar ist,
insbesondere so dass der jeweilige Stößel einrastbar ist in eine jeweilige der weiteren Ausnehmungen. Von Vorteil ist dabei, dass die Arretierung elektromagnetisch betätigbar ist.

Bei einer vorteilhaften Ausgestaltung ist bei Bestromung des Elektromagneten der Stößel von der Zentrierscheibe weggezogen und bei Nichtbestromung des Elektromagneten wird der Stößel von dem Federelement in eine der weiteren Ausnehmungen gedrückt. Von Vorteil ist dabei, dass bei Stromausfall eine Haltefunktion realisierbar ist.

Bei einer vorteilhaften Ausgestaltung beträgt der Winkelabstand einer jeweiligen weiteren Ausnehmung zur in Umfangsrichtung jeweils nächstbenachbarten weiteren Ausnehmung zwischen 1° und 5°,
wobei ein jeweiliger Stößel auf demselben Radialabstand angeordnet ist wie eine weitere Ausnehmung. Von Vorteil ist dabei, dass ein sehr feiner Winkelabstand bei der Haltefunktion realisierbar ist.

Bei einer vorteilhaften Ausgestaltung sind zumindest zwei als Hubmagnet ausgeführte Elektromagnete auf verschiedenem Radialabstand angeordnet, wobei die jeweiligen, vom jeweiligen Elektromagnet entgegen der von einem jeweiligen Federelement erzeugten Federkraft bewegbaren Stößel ebenfalls auf verschiedenen Radialabständen angeordnet sind. Von Vorteil ist dabei, dass eine noch weiter verfeinerte Winkelbeabstandung für die Haltefunktion erreichbar ist.

Bei einer vorteilhaften Ausgestaltung ist das Flanschteil mit einem Deckelteil derart verbunden, dass die Elektromagnete und ein Winkelsensor vom Flanschteil zusammen mit dem Deckeilteil gehäusebildend umgeben sind. Von Vorteil ist dabei, dass die Elektromagnete geschützt angeordnet sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Schrägansicht auf den angeschnittenen Rotor eines erfindungsgemäßen Elektromotors gezeigt, wobei die Rotorwelle 23 weggelassen ist.
In der Figur 2 ist eine Schrägansicht auf den angeschnittenen Rotor eines anderen erfindungsgemäßen Elektromotors gezeigt, wobei die Rotorwelle 23 vorhanden ist.
In der Figur 3 ist die Zentrierscheibe 4 des in Figur 2 gezeigten Motors in Schrägansicht dargestellt.
In der Figur 4 ist ein Querschnitt durch einen Teilbereich des Elektromotors gezeigt, wobei der Stößel 40 nicht in die Aussparung 45 hineinragt.

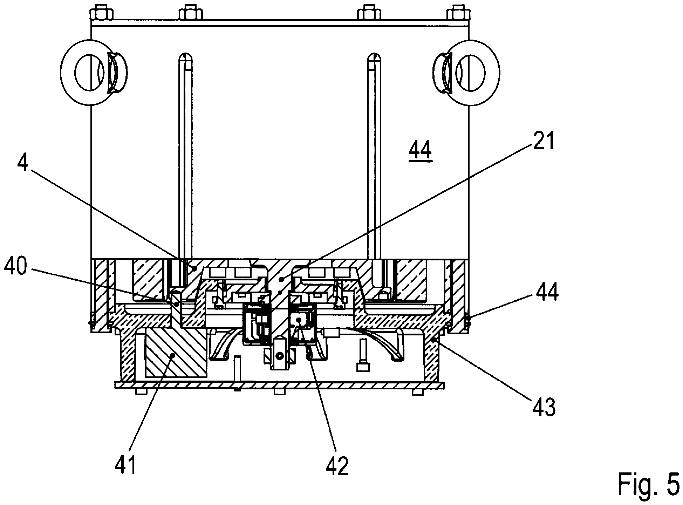

In der Figur 5 ist ein Querschnitt durch den Teilbereich des Elektromotors gezeigt, wobei der Stößel 40 in die Aussparung 45 hineinragt.

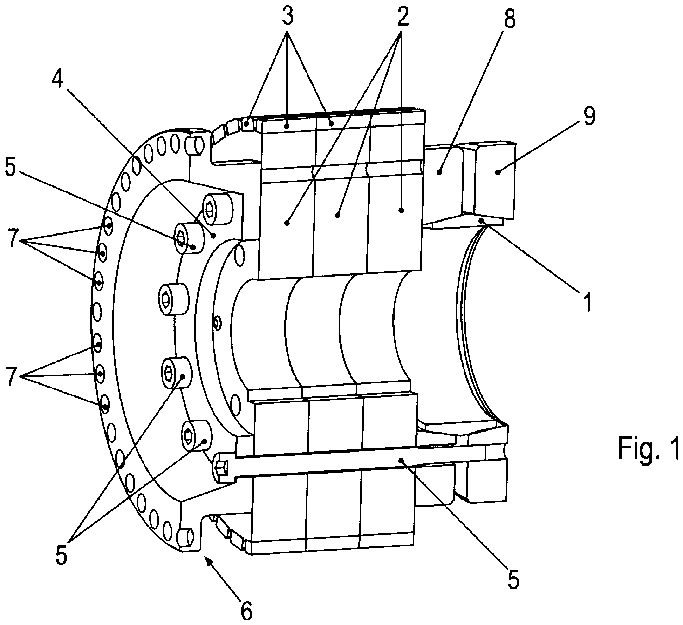

Wie in Figur 1 gezeigt, ist das zum Verbinden mit der Rotorwelle 23 vorgesehene Rotorpaket aus in axialer Richtung gestapelt angeordneten Rotorsegmenten 2 zusammengesetzt, wobei am ersten axialen Endbereich eine Schrumpfscheibe 1 und am anderen axialen Endbereich eine Zentrierscheibe 2 angeordnet ist.

Auf der radial äußeren Oberfläche der Rotorsegmente 2 sind Dauermagnete 3 angeordnet, insbesondere klebeverbunden. Die Ausdehnung des jeweiligen Dauermagneten 3 in axialer Richtung überschreitet nicht die axiale Ausdehnung eines jeweiligen Rotorsegments 2.

Mittels axial ausgerichteten Spannschrauben 5 werden die Rotorsegmente 2, die Schrumpfscheibe 1 und die Zentrierschreibe 4 zusammengehalten. Dabei sind in den Rotorsegmenten 2 und in der Zentrierschreibe 4 axial durchgehende Ausnehmungen angeordnet und darin Spannschrauben 5 durchgeführt, welche in Gewindebohrungen eines Pressrings 9 eingeschraubt sind, der ein Aufschrumpfen der Schrumpfscheibe 1 auf die Hohlwelle 24 bewirkt. Dabei drücken die Schraubenköpfe der Spannschrauben 5 auf die Zentrierscheibe 4, die somit auf die Rotorsegmente 2 gedrückt wird und diese dadurch in axialer Richtung zusammengepresst werden und gegen die Schrumpfscheibe 1 gedrückt werden.

Die Spannschrauben 5 sind in Umfangsrichtung voneinander regelmäßig beabstandet.

Vorzugsweise sind die Rotorsegmente 2 mit gleicher axialer Breite ausgeführt.

Die Zentrierscheibe 4 ist an ihrem von den Rotorsegmenten 2 abgewandten Endbereich mit einem radial aufgeweiteten Kragenabschnitt 6 ausgeführt. Dieser Kragenabschnitt 6 weist Ausnehmungen 7 auf, die als Sacklochbohrungen ausgeführt sind und alle denselben Radialabstand aufweisen sowie in Umfangsrichtung voneinander regelmäßig beabstandet sind.

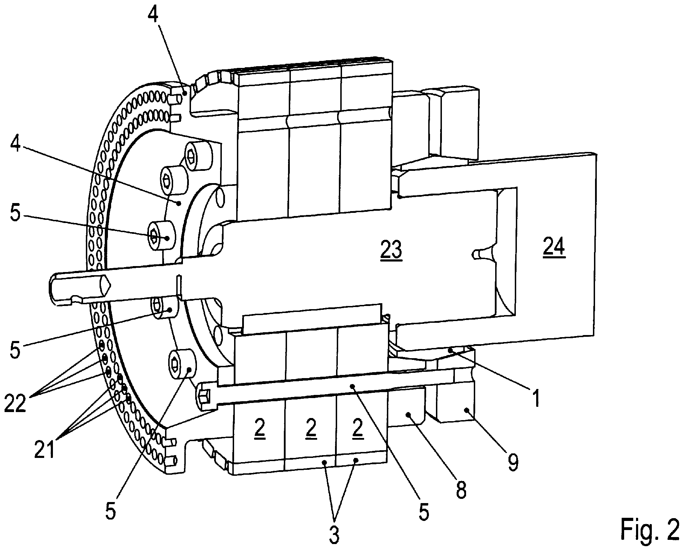

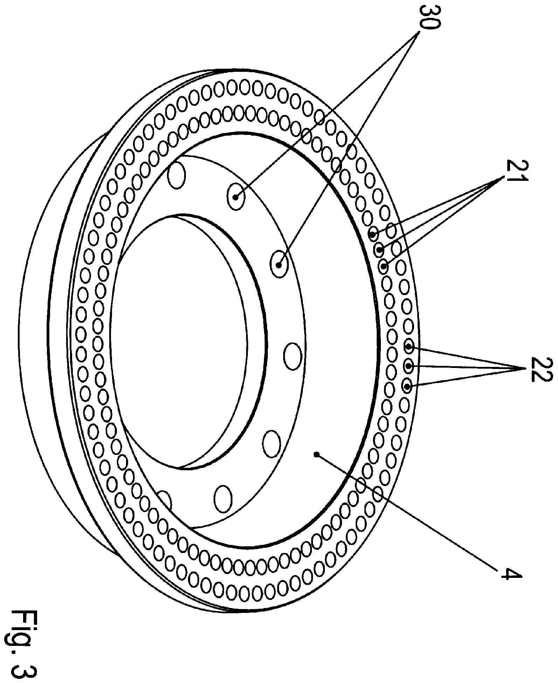

Wie in Figur 2 und Figur 3 gezeigt sind aber auch statt der auf einem Radialabstand angeordneten Ausnehmungen 7 Ausnehmungen 21 auf einem ersten Radialabstand und Ausnehmungen 22 auf einem zweiten Radialabstand angeordnet, wobei der zweite Radialabstand größer ist als der erste Radialabstand.

Der Kragenabschnitt 6 überdeckt somit einen Radialabstandsbereich, welcher größer ist als der von den Spannschrauben 5 überdeckte Radialabstandsberiech und als der von den die Spannschrauben 5 aufnehmenden Ausnehmungen 30 überdeckte Radialabstandsbereich.

Außerdem sind die Ausnehmungen 30 der Zentrierscheibe 4, durch welche die spannschrauben 5 geführt sind, axial näher an den Rotorsegmenten 2 angeordnet als der Kragenabschnitt 6 der Zentrierscheibe.

Der Radialabstand der Ausnehmungen 7, 21 und 22 ist also Größer als der Radialabstand der Ausnehmungen 30.

Wie in Figur 2 gezeigt, ist das Rotorpaket auf die Rotorwelle 23 aufgepresst und somit mit dieser Rotorwelle 23 drehfest verbunden.

Die Rotorwelle 23 ist in die Hohlwelle 24 eingeführt, wobei die Hohlwelle 24 von einer sie in Umfangsrichtung umgebenden Schrumpfscheibe 1 auf die Rotorwelle 23 aufgeschrumpft gehalten ist und somit drehfest mit der Rotorwelle 23 verbunden ist. Die Hohlwelle 24 ist entsprechend dünnwandig ausgeführt und der von der Schrumpfscheibe 1 überdeckte axiale Bereich überlappt mit dem vom Berührbereich zwischen Rotorwelle 23 und Hohlwelle 24 überdeckten axialen Bereich.

Die Schrumpfscheibe 1 ermöglicht somit die kraftschlüssige Verbindung zwischen Rotorwelle 23 und Hohlwelle 24. Somit ist vom Elektromotor, insbesondere von der Rotorwelle 23, die Hohlwelle 24 antreibbar, die einer vom Elektromotor anzutreibenden Vorrichtung zugehört.

Der Elektromotor selbst ist lagerlos herstellbar. Erst bei Anmontieren an die Vorrichtung wird die Rotorwelle 23 mittels der Schrumpfscheibe 1 mit der Hohlwelle 24 verbunden. Somit ist die Schrumpfscheibe 1 bei Auslieferung der Rotors verliersicher verbunden mit dem Rotor, nämlich mittels der Spannschrauben 5 zusammen mit den Pressringen 8 und 9 sowie mit den Rotorsegmenten 2 und der Zentrierscheibe 4 verbunden. Für diese Zeit der Auslieferung, also des Transportes des Rotors ohne Verbindung zur anzutreibenden Vorrichtung, wird der Rotor festgelegt am Stator des Elektromotors, also nicht drehbar verbunden.

Beim Anmontieren an die anzutreibende Vorrichtung wird diese Festlegung gelöst und die Hohlwelle 24 der anzutreibenden Vorrichtung mittels der Schrumpfscheibe 1 kraftschlüssig an die Rotorwelle 23 verbunden.

Die Schrumpfscheibe 1 weist zwei gegenläufige Konusabschnitte an ihrer radial äußeren Oberfläche auf, so dass die zwei darauf aufgesetzten Pressringe 8 und 9 durch axiales Annähern die Schrumpfscheibe 1 betätigen, also auf die Hohlwelle 24 drücken, so dass diese auf die Rotorwelle 23 aufgeschrumpft wird.

Das axiale Annähern der beiden Pressringe wird durch die Spannschrauben 5 bewirkt, welche in die Gewindebohrung des Pressrings 9, also des axial von den Rotorsegmenten 2 weiter entfernt angeordneten Pressrings, eingeschraubt sind und somit beim weiteren Einschrauben der Spannschrauben 5 axial zu den Rotorsegmenten 2 hin gezogen werden. Mittels der Spannschrauben 5 wird also die Schrumpfverbindung betätigt. Dabei ist besonders vorteilhaft, dass die Betätigung also von der Zentrierscheibenseite her, also von der von der Schrumpfscheibe 1 abgewandten axialen Seite der Rotorsegmente 2 und/oder der Zentrierscheibe 4 ausführbar ist.

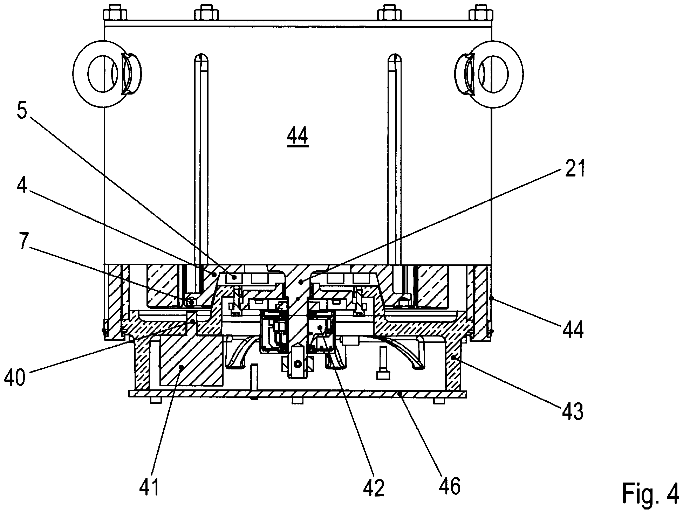

Wie in Figur 4 gezeigt, weist der Elektromotor ein Flanschteil 43 auf, das mit dem Stator beziehungsweise dem restlichen Gehäuseteil des Elektromotors verbunden ist.

Am axialen Endbereich der durch die Zentrierscheibe 4 hindurchragenden Rotorwelle 23 ist ein Winkelsensor 42 angeordnet.

Am Flanschteil 43 ist ein als Hubmagnet 41 fungierender angeordnet, der einen axial geführt und bewegbar angeordneten Stößel 40 aufweist. Bei Bestromung des Elektromagneten wird der Stößel 40 vorzugswiese entgegen der von einem Federelement erzeugten Federkraft angezogen, also axial von der Zentrierscheibe 4 weggezogen. Bei Nichtbestromung wird der Stößel vom Federelement somit in eine der Ausnehmungen 7 der Zentrierscheibe 4 eingeführt. Die Ausnehmungen 7 sind in Umfangsrichtung mit einem Winkelabstand zueinander angeordnet, der dem durchschnittlichen Spiel einer elektromagnetisch betätigbaren Reibscheibenbremse entspricht. Vorteilhaft ist hierbei also ein Winkelabstand zwischen 1° und 5°. Vorzugsweise wird die Drehzahl des Elektromotors vor Bestromen des Elektromagneten, also vor Auslösen der Bremse auf einen sehr niedrigen Wert gebracht. Auf diese Weise rastet der Stößel 40 sicher ein in eine der Ausnehmungen 7.

Mittels des oder der Hubmagneten 41 ist somit eine Haltefunktion ausführbar, also die Drehbewegung des Rotors verhinderbar.

Durch mehrreihige Ausführung, also Ausführung gemäß Figur 2 oder 3, der Zentrierscheibe 4 ist ein noch weiter verfeinertes Einrasten bewirkbar. Allerdings muss für jede der Reihen ein Hubmagnet 41 und ein Stößel 40 vorgesehen werden. Nach Einrasten eines der Stößel 40 rastet der einer anderen Reihe zugeordnete Stößel 40 nicht mehr ein, da die Reihen zueinander einen Winkelversatz aufweisen.

Bei weiteren erfindungsgemäßen Ausführungsbeispielen sind weitere Hubmagnete 41 samt Stößel 40 vorsehbar, wobei die Stößel 40 jeweils in Umfangsrichtung voneinander beabstandet sind.

Für den Transport, also vor Verbindung mit der anzutreibenden Vorrichtung, wird der Rotor des Elektromotors am Stator mittels der Zentrierscheibe 4 zentriert. Hierzu weist das Flanschteil 43 an seiner zur Zentrierscheibe 4 zugewandten Innenseite einen als Konusabschnitt ausgeführten Oberflächenabschnitt auf. Hiermit ist ein entsprechender als Konusabschnitt, insbesondere Außenkonusabschnitt, ausgeführter Oberflächenabschnitt der Zentrierscheibe 4 zentrierbar und/oder anschmiegbar. Mittels vorzugsweise axial gerichteter Verbindungsschrauben wird dann der derart am Flanschteil 43, also am Stator, ausgerichtete Rotor fixiert und erst wieder nach Einführen der Rotorwelle 23 in die Hohlwelle 24. Somit ist dann der Rotor zur anzutreibenden Welle, insbesondere Hohlwelle 24, ausgerichtet und nach Lösen der Verbindungsschrauben relativ zum Stator drehbar. Danach wird dann die Schrumpfverbindung fixiert. Schließlich werden die Statorwicklungen des Stators bestromt und somit Drehmoment erzeugbar.

Beim Verbinden des lagerlosen Elektromotors mit der anzutreibenden Maschine wird der Stator ebenfalls am Gehäuse der anzutreibenden Vorrichtung zentriert und fixiert. Somit ist ein präziser Betrieb des Elektromotors ermöglicht, obwohl der Rotor nicht direkt im Stator gelagert ist sondern der Rotor des Elektromotors über die Lagerung der Hohlwelle 24 der anzutreibenden Vorrichtung drehbar gelagert ist.

Das Flanschteil 43 weist eine Ausnehmung auf, in welcher der oder die Elektromagnete 41 und auch der Winkelsensor 42 aufgenommen sind und gehäusebildend vom Flanschteil 43 und einem darauf aufgesetzten Deckelteil 46 umgeben sind.

Das aus Schrumpfscheibe 1 und den Pressringen 8 und 9 gebildete Pressverbindungsmittel wird mittels der Spannschrauben 5 betätigt. Betätigen bedeutet hierbei, dass mittels des Einschraubens der Spannschrauben 5 die kraftschlüssige Verbindung, insbesondere Pressverbindung, insbesondere Schrumpfverbindung, zwischen anzutreibender Welle, insbesondere Hohlwelle 24, und Rotorwelle 23 bewirkt wird.

Bei weiteren erfindungsgemäßen Ausführungsbeispielen ist statt der Schrumpfscheibe samt Pressringen eine andere kraftschlüssige oder formschlüssige Verbindung mittels eines entsprechenden Pressverbindungsmittels eingesetzt. Wichtig ist dabei, dass bei Betätigung des Mittels einerseits die Verbindung zwischen Hohlwelle 24 und Rotorwelle 23 bewirkt wird und andererseits die Betätigung über die Spannschrauben 5 erfolgt. Außerdem soll zumindest ein Teil des gegebenenfalls mehrteilig ausgeführten Mittels das ihm nächstbenachbarte Rotorsegment 2 berühren.

### Bezugszeichenliste

- 1: Schrumpfscheibe
- 2: Rotorsegment
- 3: Dauermagnete
- 4: Zentrierscheibe
- 5: Spannschraube
- 6: Kragenabschnitt
- 7: Ausnehmung, insbesondere Bohrloch
- 8: Pressring
- 9: Pressring
- 21: Ausnehmung auf erstem Radialabstand
- 22: Ausnehmung auf zweitem Radialabstand
- 23: Rotorwelle
- 24: Hohlwelle
- 30: Bohrung für jeweilige Spannschraube 5
- 40: Stößel
- 41: Hubmagnet, insbesondere Elektromagnet
- 42: Winkelsensor
- 43: Flanschteil
- 44: Statorgehäuse
- 45: Aussparung für Haltefunktion
- 46: Deckelteil

## Patentansprüche

1. Elektromotor mit Rotor und Stator,
wobei der Rotor eine Rotorwelle (23) aufweist, auf die ein Rotorpaket aufgesteckt ist und mit der Rotorwelle (23) drehfest verbunden ist,
wobei das Rotorpaket in axialer Richtung aufeinander gestapelte Rotorsegmente (2) und eine Zentrierscheibe (4) sowie ein Pressverbindungsmittel aufweist,
wobei der aus den Rotorsegmenten (2) gebildete Stapel zwischen der Zentrierscheibe (4) und dem Pressverbindungsmittel angeordnet ist,
wobei zum Herstellen einer Pressverbindung der Rotorwelle (23) mit einer anzutreibenden Hohlwelle (24) das Pressverbindungsmittel mittels einer oder mehrerer der Spannschrauben (5) betätigbar ist,
wobei die Spannschrauben (5) durch Ausnehmungen der Rotorsegmente (2) und der Zentrierscheibe (4) hindurchgeführt sind,
wobei mittels der Spannschrauben (5) der Stapel zwischen der Zentrierscheibe (4) und dem Pressverbindungsmittel einspannbar ist,
wobei der Kopf einer jeweiligen Spannschraube (5) die Zentrierscheibe (4) auf den Stapel hin drückt,
wobei das Pressverbindungsmittel eine Schrumpfscheibe (1) und zwei Pressringe (8, 9) aufweist, wobei die Schrumpfscheibe (1) an ihrer radial äußeren Oberfläche zwei gegenläufige Konusabschnitte aufweist,
wobei die Spannschrauben (5) zumindest mit dem axial von den Rotorsegmenten (2) weiter entfernt angeordneten Pressring (9) schraubverbunden sind,
wobei die Schrumpfscheibe (1) zusammen mit den Pressringen (8, 9) mittels der Spannschrauben (5) mit dem Rotor verliersicher verbunden ist,
wobei mittels des Einschraubens der Spannschrauben (5) die zwei auf der Schrumpfscheibe (1) aufgesetzten Pressringe (8 und 9) durch axiales Annähern die Schrumpfscheibe (1) auf die Hohlwelle (24) drücken, so dass die Hohlwelle (24) auf die Rotorwelle (23) aufgeschrumpft wird,
wobei das Einschrauben der Spannschrauben (5) von der Zentrierscheibenseite her ausgeführt wird.

2. Elektromotor nach Anspruch 1,
**dadurch gekennzeichnet, dass**
der Elektromotor ein mit dem Stator verbundenes Flanschteil (43) aufweist.

3. Elektromotor nach mindestens einem der vorangegangenen Ansprüche,
**dadurch gekennzeichnet, dass**
die Spannschrauben (5) jeweils in eine Gewindebohrung eines Teils des Pressverbindungsmittels eingeschraubt sind.

4. Elektromotor nach mindestens einem der vorangegangenen Ansprüche,
**dadurch gekennzeichnet, dass**
am radial äußeren Umfang des jeweiligen Rotorsegments (2) Dauermagnete (3) angeordnet sind.

5. Elektromotor nach mindestens einem der vorangegangenen Ansprüche,
**dadurch gekennzeichnet, dass**
die Zentrierscheibe (4) an ihrer Oberfläche einen Konusabschnitt aufweist und das Flanschteil (43) einen entsprechenden Konusabschnitt an seiner Oberfläche aufweist, so dass die beiden Konusabschnitte zumindest in einem Abschnitt oder abschnittsweise aneinander anliegen,
wobei die Zentrierscheibe (4) mit dem Flanschteil (43) lösbar verbunden ist.

6. Elektromotor nach mindestens einem der vorangegangenen Ansprüche,
**dadurch gekennzeichnet, dass**
die Zentrierscheibe (4) weitere Ausnehmungen (21, 22) aufweist, welche in Umfangsrichtung voneinander regelmäßig beabstandet sind.

7. Elektromotor nach mindestens einem der vorangegangenen Ansprüche,
**dadurch gekennzeichnet, dass**
weitere erste Ausnehmungen (21) auf einem ersten Radialabstand und weitere zweite Ausnehmungen (22) auf einem zweiten Radialabstand angeordnet sind, wobei der erste Radialabstand größer ist als der zweite Radialabstand.

8. Elektromotor nach mindestens einem der vorangegangenen Ansprüche,
**dadurch gekennzeichnet, dass**
am Flanschteil (43) zumindest ein Elektromagnet angeordnet ist, von welchem jeweils ein Stößel (40) entgegen der von einem Federelement erzeugten Federkraft bewegbar ist.

9. Elektromotor nach Anspruch 8,
**dadurch gekennzeichnet, dass**
bei Bestromung des Elektromagneten der Stößel (40) von der Zentrierscheibe (4) weggezogen ist und bei Nichtbestromung des Elektromagneten der Stößel (40) von dem Federelement in eine der weiteren Ausnehmungen (21, 22) gedrückt wird.

10. Elektromotor nach Anspruch 6,
**dadurch gekennzeichnet, dass**
der Winkelabstand einer jeweiligen weiteren Ausnehmung (7) zur in Umfangsrichtung jeweils nächstbenachbarten weiteren Ausnehmung (7) zwischen 1° und 5° beträgt,
wobei ein jeweiliger Stößel (40) auf demselben Radialabstand angeordnet ist wie eine weitere Ausnehmung (7).

11. Elektromotor nach mindestens einem der vorangegangenen Ansprüche,
**dadurch gekennzeichnet, dass**
das Flanschteil (43) mit einem Deckelteil (46) derart verbunden ist, dass die Elektromagnete und ein Winkelsensor (42) vom Flanschteil (43) zusammen mit dem Deckeilteil gehäusebildend umgeben sind.

## Claims

1. An electric motor with a rotor and stator,
wherein the rotor has a rotor shaft (23) on which a laminated rotor core is placed and is connected in rotation-resistant manner to the rotor shaft (23),
wherein the laminated rotor core has rotor segments (2) which are stacked on one another in the axial direction and a centring disc (4) and also a press connection means,
wherein the stack formed from the rotor segments (2) is arranged between the centring disc (4) and the press connection means,
wherein to produce a press connection of the rotor shaft (23) with a hollow shaft (24) which is to be driven the press connection means can be actuated by means of one or more of the clamping screws (5),
wherein the clamping screws (5) are passed through cutouts in the rotor segments (2) and in the centring disc (4),
wherein the stack can be clamped between the centring disc (4) and the press connection means by means of the clamping screws (5),
wherein the head of a respective clamping screw (5) presses the centring disc (4) onto the stack,
wherein the press connection means has a shrink disc (1) and two pressing rings (8, 9), wherein the shrink disc (1) has on its radially outer surface two conical portions which run in opposite directions,
wherein the clamping screws (5) are screw-connected at least to that pressing ring (9) which is arranged axially further removed from the rotor segments (2),
wherein the shrink disc (1) together with the pressing rings (8, 9) is connected non-detachably to the rotor by means of the clamping screws (5),
wherein by means of the screwing-in of the clamping screws (5) the two pressing rings (8 and 9) which are placed on the shrink disc (1) by axially approaching press the shrink disc (1) onto the hollow shaft (24), so that the hollow shaft (24) is shrunk onto the rotor shaft (23),
wherein the screwing-in of the clamping screws (5) is carried out from the centring-disc side.

2. An electric motor according to Claim 1,
**characterised in that**
the electric motor has a flange part (43) connected to the stator.

3. An electric motor according to at least one of the preceding claims,
**characterised in that**
the clamping screws (5) in each case are screwed into a threaded bore of a part of the press connection means.

4. An electric motor according to at least one of the preceding claims,
**characterised in that**
permanent magnets (3) are arranged on the radially outer periphery of the respective rotor segment (2).

5. An electric motor according to at least one of the preceding claims,
**characterised in that**
the centring disc (4) has a conical portion on its surface and the flange part (43) has a corresponding conical portion on its surface, so that the two conical portions lie against one another at least in one portion or in portions,
with the centring disc (4) being connected detachably to the flange part (43).

6. An electric motor according to at least one of the preceding claims,
**characterised in that**
the centring disc (4) has further cutouts (21, 22) which are regularly spaced apart from each other in the peripheral direction.

7. An electric motor according to at least one of the preceding claims,
**characterised in that**
further first cutouts (21) are arranged at a first radial distance and further second cutouts (22) at a second radial distance, the first radial distance being greater than the second radial distance.

8. An electric motor according to at least one of the preceding claims,
**characterised in that**
at least one electromagnet is arranged on the flange part (43), by which in each case one tappet (40) is movable counter to the spring force generated by a spring element.

9. An electric motor according to Claim 8,
**characterised in that**
upon energisation of the electromagnet the tappet (40) is drawn away from the centring disc (4) and upon non-energisation of the electromagnet the tappet (40) is pressed by the spring element into one of the further cutouts (21, 22).

10. An electric motor according to Claim 6,
**characterised in that**
the angular distance of a respective further cutout (7) from the further cutout (7) which is next adjacent in the peripheral direction in each case is between 1° and 5°,
with a respective tappet (40) being arranged at the same radial distance as a further cutout (7).

11. An electric motor according to at least one of the preceding claims,
**characterised in that**
the flange part (43) is connected to a cover part (46) such that the electromagnets and an angular sensor (42) are surrounded in housing-forming manner by the flange part (43) together with the cover part.

## Revendications

1. Moteur électrique comprenant un rotor et un stator,
ledit rotor comportant un arbre rotorique (23) sur lequel un bloc rotorique est emboîté et est verrouillé en rotation avec ledit arbre rotorique (23),
lequel bloc rotorique est muni de segments rotoriques (2) empilés les uns sur les autres dans le sens axial, et d'un disque de centrage (4), ainsi que d'un moyen de liaison par compression,
l'empilement, constitué par lesdits segments rotoriques (2), étant interposé entre ledit disque de centrage (4) et ledit moyen de liaison par compression,
sachant que,
pour instaurer une liaison par compression entre ledit arbre rotorique (23) et un arbre creux (24) devant être entraîné, ledit moyen de liaison par compression peut être actionné à l'aide d'une ou de plusieurs des vis de serrage (5),
lesquelles vis de serrage (5) traversent des évidements desdits segments rotoriques (2) et dudit disque de centrage (4),
ledit empilement pouvant être enserré, à l'aide desdites vis de serrage (5), entre ledit disque de centrage (4) et ledit moyen de liaison par compression,
la tête d'une vis de serrage (5) considérée exerçant alors une pression sur ledit disque de centrage (4), en direction dudit empilement,
sachant que ledit moyen de liaison par compression inclut un disque thermorétractable (1) et deux bagues de compression (8, 9), ledit disque thermorétractable (1) étant pourvu, sur sa surface radialement extérieure, de deux régions tronconiques à orientations opposées, lesdites vis de serrage (5) étant reliées, par vissage, au moins à la bague de compression (9) davantage éloignée desdits segments rotoriques (2), dans le sens axial,
ledit disque thermorétractable (1) étant relié de manière imperdable audit rotor à l'aide desdites vis de serrage (5), conjointement auxdites bagues de compression (8, 9),
sachant que, sous l'effet du vissage desdites vis de serrage (5), les deux bagues de compression (8 et 9) mises en place sur ledit disque thermorétractable (1) pressent ledit disque thermorétractable (1) sur l'arbre creux (24), par rapprochement axial, de sorte que ledit arbre creux (24) est emmanché à force sur l'arbre rotorique (23),
le vissage desdites vis de serrage (5) étant effectué à partir du côté disque de centrage.

2. Moteur électrique selon la revendication 1,
**caractérisé par le fait que**
ledit moteur électrique est doté d'une partie de bridage (43) reliée au stator.

3. Moteur électrique selon au moins l'une des revendications précédentes,
**caractérisé par le fait que**
les vis de serrage (5) sont vissées, à chaque fois, dans un perçage taraudé d'une partie du moyen de liaison par compression.

4. Moteur électrique selon au moins l'une des revendications précédentes,
**caractérisé par le fait que**
des aimants permanents (3) sont disposés sur le pourtour radialement extérieur du segment rotorique (2) considéré.

5. Moteur électrique selon au moins l'une des revendications précédentes,
**caractérisé par le fait que**
le disque de centrage (4) est muni d'une région tronconique, sur sa surface, et la partie de bridage (43) est pourvue d'une région tronconique correspondante, sur sa surface, de telle sorte que les deux régions tronconiques soient en applique l'une contre l'autre au moins sur un tronçon, ou par zones,
le disque de centrage (4) étant relié de manière libérable à ladite partie de bridage (43).

6. Moteur électrique selon au moins l'une des revendications précédentes,
**caractérisé par le fait que**
le disque de centrage (4) comporte des évidements supplémentaires (21, 22) régulièrement espacés les uns des autres dans le sens périphérique.

7. Moteur électrique selon au moins l'une des revendications précédentes,
**caractérisé par le fait que**
des premiers évidements supplémentaires (21) sont agencés suivant un premier espacement radial, et des seconds évidements supplémentaires (22) sont agencés suivant un second espacement radial, ledit premier espacement radial étant supérieur audit second espacement radial.

8. Moteur électrique selon au moins l'une des revendications précédentes,
**caractérisé par le fait**
**qu'**au moins un électro-aimant, par lequel un coulisseau (40) peut être respectivement mis en mouvement en opposition à la force élastique engendrée par un élément élastique, est implanté sur la partie de bridage (43).

9. Moteur électrique selon la revendication 8,
**caractérisé par le fait que**
le coulisseau (40) est repoussé à l'écart du disque de centrage (4) lorsque l'électro-aimant est alimenté en courant et, lorsque ledit électro-aimant n'est pas alimenté en courant, ledit coulisseau (40) est poussé, par l'élément élastique, dans l'un des évidements supplémentaires (21, 22).

10. Moteur électrique selon la revendication 6,
**caractérisé par le fait que**
l'écart angulaire d'un évidement supplémentaire (7) considéré, par rapport à l'évidement supplémentaire (7) occupant la position respectivement la plus voisine dans le sens périphérique, mesure entre 1° et 5°,
sachant qu'un coulisseau (40) considéré est disposé suivant le même espacement radial qu'un évidement supplémentaire (7).

11. Moteur électrique selon au moins l'une des revendications précédentes,
**caractérisé par le fait que**
la partie de bridage (43) est reliée à une partie de recouvrement (46) de façon telle que les électro-aimants et un capteur angulaire (42) soient entourés par ladite partie de bridage (43), conjointement à ladite partie de recouvrement, avec formation d'un carter.
